# EUROPEAN PATENT SPECIFICATION

(11) **EP 4 180 311 B1**
(45) Date of publication and mention of the grant of the patent: **04.03.2026**
(21) Application number: 21861596.1
(22) Date of filing: 25.08.2021
(51) Int. Cl.: B63B 11/00, B63B 11/04, B63B 17/00, B63H 21/38, B63J 4/00, A62C 3/10

(54) **SHIP**
SCHIFF
NAVIRE

(30) Priority: 25.08.2020 JP 2020141417
(43) Date of publication of application: 17.05.2023
(73) Proprietor: Mitsubishi Shipbuilding Co., Ltd., Yokohama-shi Kanagawa 220-8401 (JP)
(72) Inventor: OGATA, Toshio, Yokohama-shi Kanagawa 220-8401 (JP); UNSEKI, Takashi, Tokyo 108-0014 (JP)
(74) Representative: Studio Torta S.p.A.
(86) International application number: PCT/JP2021/031102
(87) International publication number: WO 2022/045172

(56) References cited:
- CN-A- 106 080 979
- CN-U- 208 339 955
- JP-A- 2001 033 127
- JP-A- 2006 317 127
- JP-A- 2013 209 000
- JP-A- H0 783 044
- JP-A- H1 130 460
- JP-A- S5 132 096
- JP-A- S61 129 393
- JP-U- H0 516 580
- JP-U- H0 516 580
- JP-U- H0 663 060
- KR-A- 20130 028 391

## Description

### Technical Field

The present disclosure relates to a ship.

This application claims the right of priority based on Japanese Patent Application No. 2020-141417 filed with the Japan Patent Office on August 25, 2020.

### Background Art

In ships, in a case where a combustible gas as fuel for ship propulsion or as cargo is loaded, measures are being taken in preparation for the unlikely event of gas leakage from a tank containing the combustible gas or a pipe system connected to the tank. For example, ships are provided with escape routes such that crew members can evacuate to an accommodation space, a helipad, a lifeboat, or the like in the event of an accident such as a fire.

For example, PTL 1 discloses a configuration having a plurality of escape routes. In such a configuration, the escape route disposed on the plant side is disposed below an upper deck. In this way, flames caused by a fire in the plant are shielded by the upper deck, making it possible to more reliably avoid the flames.

### Citation List

### Patent Literature

[PTL 1] Japanese Unexamined Patent Application Publication No. 2011-230550;
[PTL 2] CN 106 080 979 A (JIANGSU SHIP DESIGN & RES INST CO LTD) 9 November 2016 (2016-11-09);
[PTL 3] CN 208 339 955 U (LI DAOTANG) 8 January 2019 (2019-01-08);
[PTL 4] JP H05 16580 U; and
[PTL 5] KR 2013 0028391 A (HYUN DAI HEAVY IND CO LTD [KR]) 19 March 2013 (2013-03-19).

### Summary of Invention

### Technical Problem

Incidentally, in a case where ammonia is loaded as fuel for propulsion or as cargo, if an ammonia gas leaks, it reacts with moisture in the air to create mist of the ammonia gas, which may float in the air. An ammonia gas has high irritation to the mucous membranes of the human body. Therefore, in the unlikely event of leakage, it is desired to prevent the ammonia gas from coming into contact with crew members or passengers.

The present disclosure has been made to solve the above problems, and has an object to provide a ship in which it is possible to effectively reduce the influence of an ammonia gas within the ship.

### Solution to Problem

The above-mentioned problems are solved by a ship according to claim 1.

### Advantageous Effects of Invention

According to the ship of the present disclosure, it is possible to effectively reduce the influence of an ammonia gas within the ship.

### Brief Description of Drawings

Fig. 1 is a side view of a ship according to an embodiment of the present disclosure.
Fig. 2 is a diagram showing the configurations of water sprinkling equipment and water recovery equipment provided in a ship according to a first embodiment of the present disclosure.
Fig. 3 is a diagram showing the water sprinkling equipment according to the first embodiment of the present disclosure as viewed from an extension direction of a passage.
Fig. 4 is a diagram showing the water sprinkling equipment according to the first embodiment of the present disclosure as viewed from a width direction of the passage.
Fig. 5 is a diagram showing water sprinkling equipment according to a first modification example of the first embodiment of the present disclosure as viewed from the extension direction of the passage.
Fig. 6 is a diagram showing water sprinkling equipment according to the first modification example of the first embodiment of the present disclosure as viewed from the width direction of the passage.
Fig. 7 is a diagram showing water sprinkling equipment according to a second modification example of the first embodiment of the present disclosure as viewed from the extension direction of the passage.
Fig. 8 is a diagram showing water sprinkling equipment according to a second embodiment of the present disclosure as viewed from the extension direction of the passage.
Fig. 9 is a side view of a ship according to a modification example of the embodiment of the present disclosure.

### Description of Embodiments

### <First Embodiment>

### (Overall Configuration of Ship)

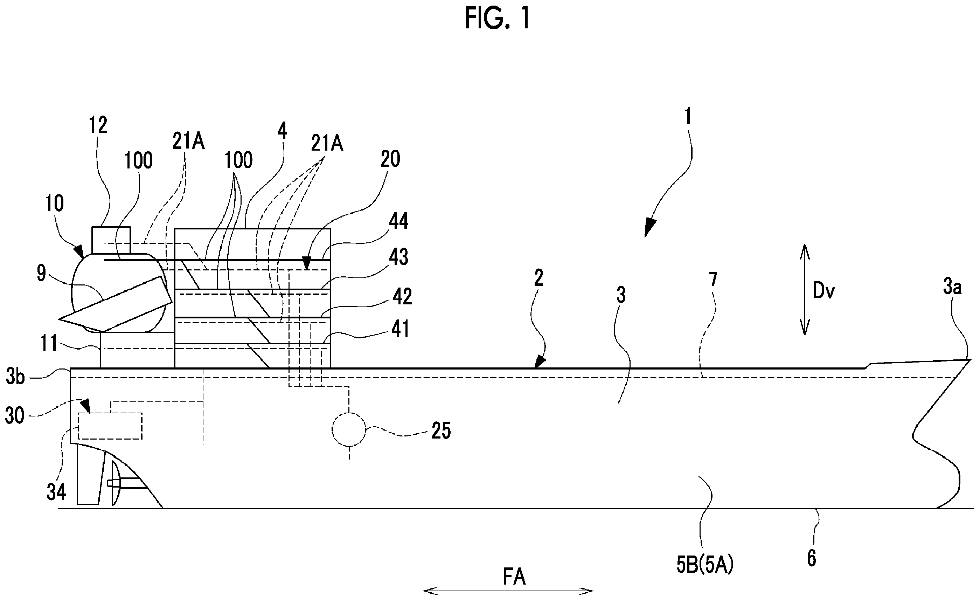

Hereinafter, a ship according to an embodiment of the present disclosure will be described with reference to Figs. 1 to 4.

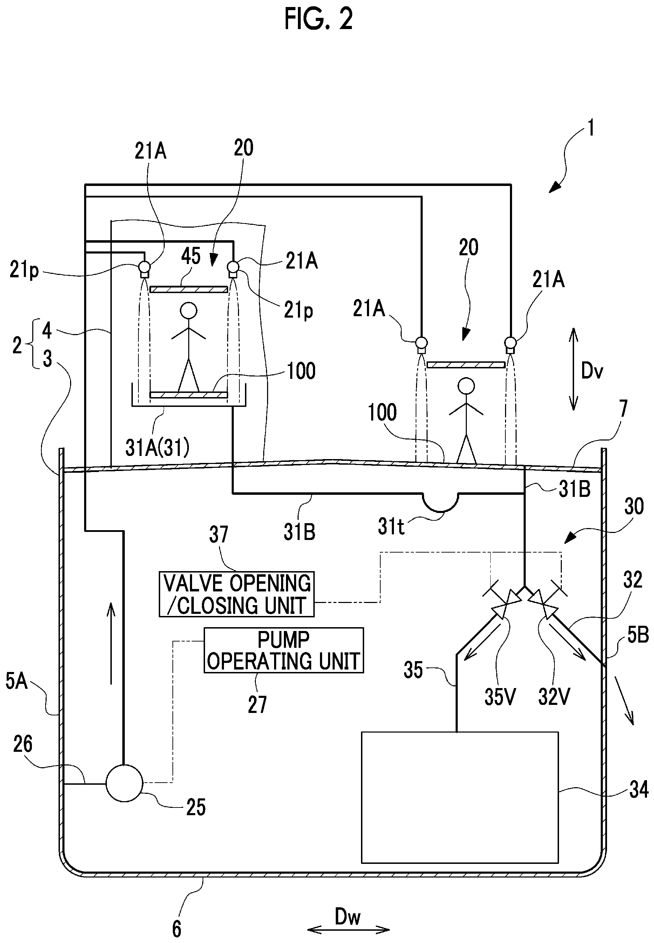

As shown in Figs. 1 and 2, a ship 1 of the present embodiment includes a ship main body 2, a tank 10, water sprinkling equipment 20, and water recovery equipment 30. The ship type of the ship 1 is not limited to a specific type. As the ship type of the ship 1, for example, a liquefied gas carrier, a ferry, a RORO ship, a car carrier, a passenger ship, or the like can be exemplified.

### (Construction of Ship Main Body)

The ship main body 2 includes a hull 3 and a superstructure 4.

The hull 3 has a pair of broadsides 5A and 5B and a ship bottom 6 that form an outer shell of the hull. The broadsides 5A and 5B include a pair of broadside outer plates forming the left and right broadsides. The ship bottom 6 includes a ship bottom outer plate that connects the broadsides 5A and 5B. The outer shell of the hull 3 is formed in a U shape in a cross section orthogonal to a bow-stern direction FA by the pair of broadsides 5A and 5B and the ship bottom 6.

As shown in Fig. 1, the hull 3 further includes an upper deck 7 that is a through deck which is disposed in the uppermost layer. The upper deck 7 that is exemplified in the present embodiment is also an exposed deck that is exposed to the outside. A main engine (not shown) for propelling the ship 1, a generator (not shown) for supplying electricity to the ship, and the like are accommodated inside the hull 3 below the upper deck 7.

The superstructure 4 is provided on the upper deck 7 of the hull 3. In the ship 1 that is exemplified in the present embodiment, the superstructure 4 is disposed on the side close to a stern 3b in the bow-stern direction FA. The superstructure 4 has a plurality of layers of upper decks 41 to 44 therein. The plurality of layers of upper decks 41 to 44 are provided at intervals in an up-down direction Dv in the superstructure 4. An accommodation space and the like are provided on the plurality of layers of upper decks 41 to 44 in the superstructure 4. The ship 1 in the present embodiment is provided with a cargo space (not shown) for loading cargo inside the hull 3 on the bow 3a side with respect to the superstructure 4.

### (Configuration of Tank)

The tank 10 stores liquefied ammonia therein. The liquefied ammonia is sent as fuel to the main engine or the generator provided in the hull 3 through a supply pipe system (not shown. The tank 10 is provided above the upper deck 7 of the hull 3. In the embodiment of the present disclosure, the tank 10 is provided on the stern 3b side in the bow-stern direction FA with respect to the superstructure 4. Further, a fuel equipment room 11 is provided on the upper deck 7. Various devices (not shown) for gasifying the liquefied ammonia in the tank 10 are accommodated in the fuel equipment room 11. Further, a tank connection space 12 is provided above the tank 10. The tank connection space 12 is provided with, for example, a pump and a valve (not shown) or the like which is used when loading the liquefied ammonia into the tank 10.

A lifeboat 9 is equipped on the outside of the superstructure 4. The lifeboat 9 is used when passengers or crew members of the ship 1 escape overboard.

Further, the ship main body 2 is provided with a passage 100 that is used as an evacuation route through which passengers or crew members of the ship 1 evacuate. The passage 100 is provided in a corridor in the superstructure 4, a space such as a master station having a certain extent of area, a route through which the lifeboat 9 is boarded, the upper deck 7, or the like.

As shown in Fig. 2, the water sprinkling equipment 20 is equipment capable of sprinkling water to the passage 100. The water sprinkling equipment 20 includes a water sprinkling unit 21A, a water supply pump 25, and a pump operation unit 27.

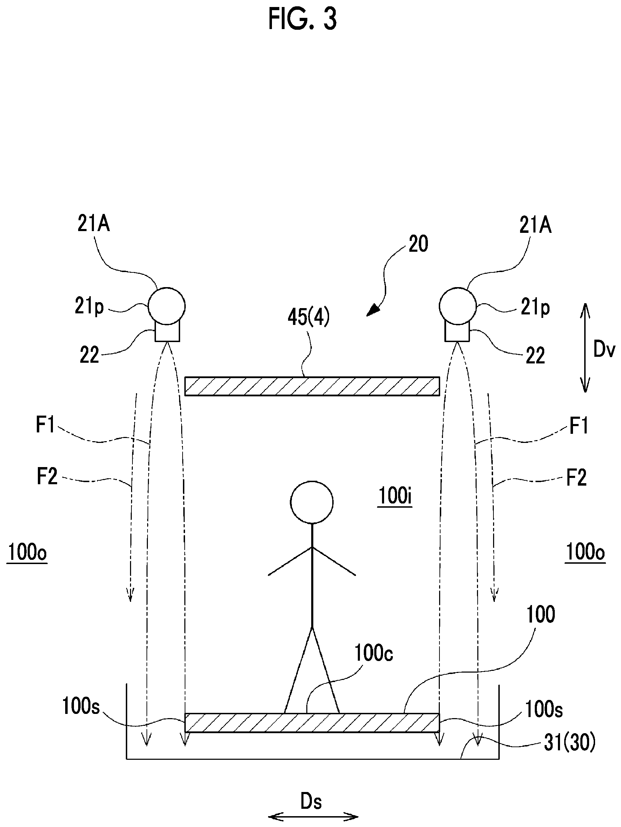

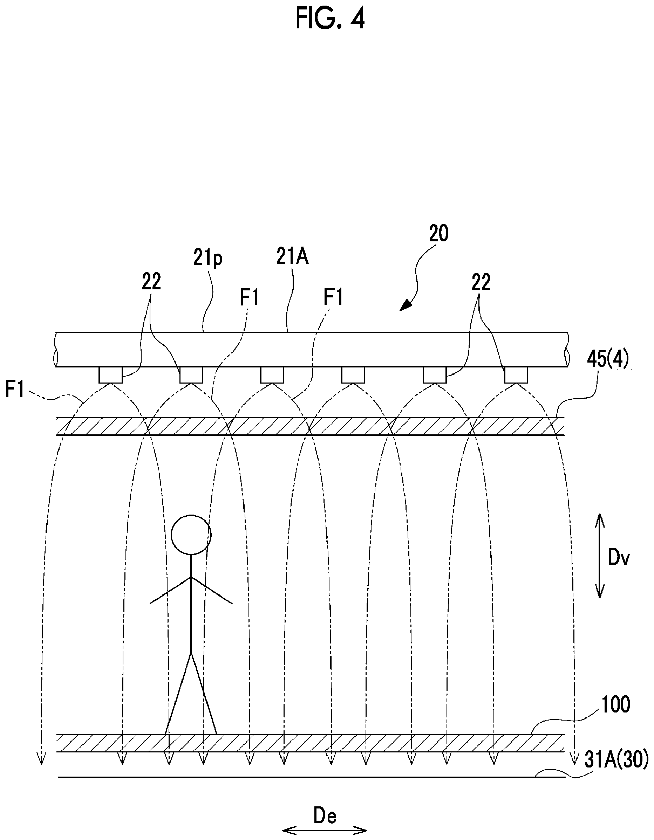

As shown in Figs. 3 and 4, the water sprinkling unit 21A is provided to extend in an extension direction De of the passage 100 (the direction orthogonal to the plane of the paper in Fig. 3). The water sprinkling unit 21A is provided at a ceiling 45 of the superstructure 4 provided above the passage 100. The water sprinkling units 21A are provided on both sides in a width direction Ds orthogonal to the extension direction De of the passage 100 in the horizontal plane. Each of the water sprinkling units 21A includes a pipe 21p and a plurality of ware nozzle 22. The pipe 21p extends in the extension direction De of the passage 100. The plurality of ware nozzles 22 are provided in the pipe 21p at intervals in the extension direction De of the passage 100. Each of the water nozzles 22 has a nozzle shape and blows out downward the water flowing in the pipe 21p. As shown in Fig. 4, the plurality of water nozzles 22 are disposed such that water flows F1 that are flows of water which are blown out from the water nozzles 22 adjacent to each other in the extension direction De overlap each other. As shown in Fig. 3, the water sprinkling unit 21A can sprinkle water only to a side portion 100s out of a central portion 100c and the side portions 100s in the width direction Ds of the passage 100.

As shown in Fig. 2, the water supply pump 25 supplies water to the pipe 21p of each water sprinkling unit 21A. A water intake pipe 26 that is open, for example, at the lower portion or the like of the broadside 5A is connected to the water supply pump 25. When the water supply pump 25 operates, seawater outside the hull 3 is sucked up through the water intake pipe 26 and sent to the pipe 21p.

The pump operation unit 27 switches ON/OFF of the operation of the water supply pump 25. The pump operation unit 27 operates the water supply pump 25, for example, in a case where a crew member or the like operates a switch or the like that notifies that ammonia is leaking. Further, the pump operation unit 27 may operate the water supply pump 25, for example, in a case where ammonia leakage is detected by a sensor (not shown) or the like in the tank 10, a supply pipe system (not shown) connected to the tank 10, the fuel equipment room 11, the tank connection space 12, or the like.

In the water sprinkling equipment 20 as described above, the water supply pump 25 is operated by the pump operation unit 27 in a case where ammonia leaks. Then, the seawater outside the hull 3 is sucked up through the water intake pipe 26 and sent to each pipe 21p of the water sprinkling unit 21A. As shown in Fig. 3, in the water sprinkling unit 21A, water is blown out from the plurality of water nozzles 22, so that film-like or curtain-like water flows F1 that are continuous in the extension direction De are formed on the side portions 100s on both sides in the width direction Ds of the passage 100. The water flow Fi is formed so as to separate the region of a passage inside 100i that is the inside of the passage 100 in the width direction Ds and the region of a passage outside 100o that is the outside in the width direction Ds with respect to the side portion 100s between the passage 100 and the ceiling 45. When the water of the water flow F1 comes into contact with the ammonia gas, it absorbs the ammonia gas and flows down as ammonia-absorbed water. Therefore, the invasion of the ammonia gas from the passage outside 100o to the passage inside 100i is suppressed. Further, due to the water flow F1, an air flow F2 in the same direction as the water flow F1 is also generated in the surrounding air. The invasion of the ammonia gas or misty ammonia from the passage outside 100o to the passage inside 100i is also suppressed by the water flow F1 and the air flow F2.

The water sprinkling equipment 20 can also be used as a sprinkler or the like in the event of a fire.

As shown in Fig. 2, the water recovery equipment 30 includes a water recovery part 31, a water discharge part 32, and a water storage part 34.

The water recovery part 31 recovers the water sprinkled by the water sprinkling equipment 20. As shown in Fig. 2, in the embodiment of the present disclosure, the water recovery part 31 has, for example, a recovery tray 31A that is recessed downward. The recovery tray 31A is provided below the passage 100. The recovery tray 31A is provided to be continuous in the extension direction De. The recovery tray 31A is provided to protrude to both sides in the width direction Ds of the passage 100. The water recovery part 31 may have grooves provided on both sides in the width direction Ds of the passage 100, instead of the recovery tray 31A.

As shown in Fig. 2, a recovery pipe 31B is connected to the recovery tray 31A. The recovery pipe 31B leads the water recovered by the recovery tray 31A to the water discharge part 32 or the water storage part 34. Further, in a case where the passage 100 provided with the water sprinkling unit 21A is provided on the upper deck 7, the recovery pipe 31B recovers the water flowing on the upper deck 7. The upper deck 7 is inclined obliquely downward from the central portion in a ship width direction Dw toward the outside in the ship width direction Dw. Therefore, the recovery pipe 31B may be provided so as to be open at a position near the broadside 5B (or 5A) provided outside in the ship width direction Dw in the upper deck 7. Further, the recovery pipe 31B is provided with a trap portion 31t curved or bent downward. A backflow of the ammonia gas from the water storage part 34 side to the passage 100 side is suppressed by the trap portion 31t.

The water discharge part 32 discharges the water recovered by the water recovery part 31 to the outside of the ship 1. The water discharge part 32 has a tubular shape and is branched from the recovery pipe 31B. The water discharge part 32 is provided to be open, for example, at the broadside 5B (or 5A). Here, the water discharge part 32 may be provided so as to be open at the broadside 5B on the side opposite in the ship width direction Dw to the broadside 5A at which the water intake pipe 26 that sucks up seawater for sprinkling water to the passage 100 by the water sprinkling equipment 20 is open. The water discharge part 32 discharges the water recovered by the water recovery part 31 from the broadside 5B to the outside of the ship 1.

The water storage part 34 is provided inside the hull 3. The water storage part 34 is a tank that stores the water recovered by the water recovery part 31. The water recovered by the water recovery part 31 is sent to the water storage part 34 through a tank drain pipe 35 provided to be branched from the recovery pipe 31B. The water storage part 34 may be used as a tank for storing water for other uses in normal times (when ammonia leakage does not occur).

The water discharge part 32 and the tank drain pipe 35 are provided with on/off valves 32V and 35V, respectively. The opening/closing operation of each of the on/off valves 32V and 35V is remotely controlled by a valve opening/closing unit 37. The valve opening/closing unit 37 opens at least one of the on/off valves 32V and 35V when the water supply pump 25 operates due to leakage of ammonia. The valve opening/closing unit 37 may operate, for example, to detect the concentration of ammonia contained in the water recovered by the water recovery part 31 with a sensor (not shown) and open one of the on/off valves 32V and 35V, based on the detected concentration of ammonia. Specifically, when the concentration of ammonia is lower than a reference determined in advance, the on/off valve 32V may be opened to discharge the water overboard from the water discharge part 32. Further, when the concentration of ammonia is higher than a reference determined in advance, the on/off valve 35V may be opened to store the water in the water storage part 34.

In the water storage part 34, treatment to lower the concentration of ammonia with seawater or the like separately taken in from the outside, neutralization treatment, or the like may be performed. Further, for example, the operation of switching the opening/closing of the on/off valves 32V and 35V may be performed according to the water level in the water storage part 34, such as when the water storage part 34 is full, to discharge the water flowing through the recovery pipe 31B to the outside of the ship 1. Further, the operation of switching the opening/closing of the on/off valves 32V and 35V can also be performed with the judgment of a crew member, instead of the remote operation.

In the ship 1 of the above embodiment, in a case where the ammonia stored in the tank 10 or the ammonia sent from the tank 10 to the pipe system or the like leaks, water is sprinkled to the passage 100 by the water sprinkling equipment 20. The passage inside 100i and the passage outside 100o are separated by the water that is sprinkled by the water sprinkling equipment 20, so that the invasion of an ammonia gas or misty ammonia to the passage 100 can be suppressed. In this way, the contact of the ammonia gas with passengers or crew members passing through the passage 100 can be suppressed. Therefore, it is possible to effectively suppress the influence of the ammonia gas within the ship 1.

In the above embodiment, the water sprinkling equipment 20 can sprinkle water only to the side portion 100s out of the central portion 100c and the side portion 100s in the width direction Ds of the passage 100. In this way, the passage inside 100i and the passage outside 100o are separated by the water that is sprinkled only to the side portion 100s of the passage 100, so that the invasion of the ammonia gas to the passage inside 100i can be suppressed.

In the above embodiment, the passage inside 100i and the passage outside 100o are separated along the extension direction De of the passage 100 by blowing out water from the plurality of water nozzles 22 provided at intervals in the extension direction De of the passage 100, so that the invasion of the ammonia gas to the passage inside 100i can be suppressed.

In the above embodiment, the water sprinkling units 21A are provided above the passage 100 and on both sides in the width direction Ds of the passage 100. In this way, the passage inside 100i and the passage outside 100o are separated on both sides in the width direction Ds of the passage 100 by the water that is sprinkled from above the passage 100, so that the invasion of the ammonia gas to the passage inside 100i can be suppressed.

In the above embodiment, the water sprinkled by the water sprinkling equipment 20 can be recovered by the water recovery part 31 provided below the passage 100. In this way, water that contains ammonia due to contact with the ammonia gas can be recovered, and an increase in the concentration of ammonia remaining around the passage 100 can be suppressed.

In the above embodiment, the water recovered by the water recovery part 31 is discharged overboard by the water discharge part 32.

In the above embodiment, the water recovered by the water recovery part 31 can be stored in the water storage part 34. In the water storage part 34, for example, treatment to dilute ammonia contained in the recovered water, neutralization treatment, or the like can be performed.

### (First Modification Example of First Embodiment)

In the first embodiment, the water sprinkling unit 21A includes the pipe 21p and the plurality of water nozzles 22. However, there is no limitation thereto.

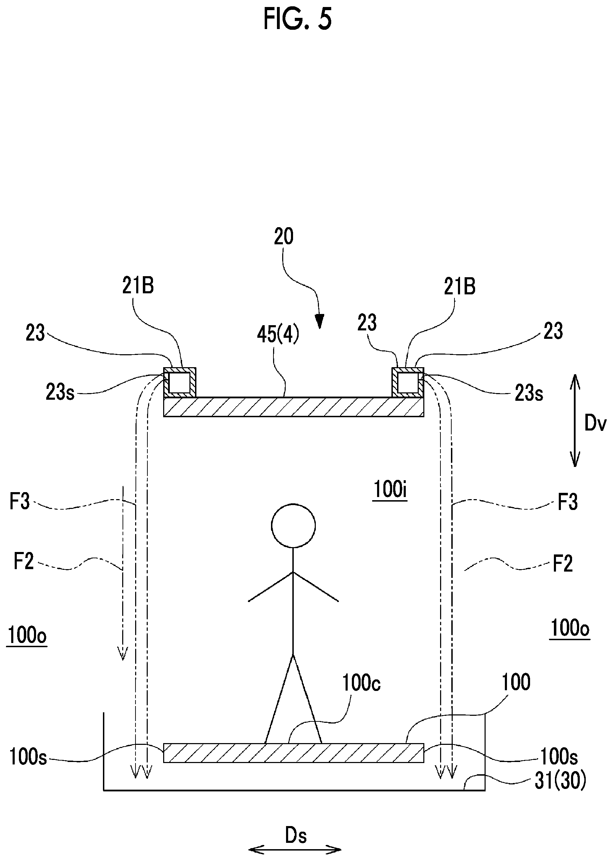

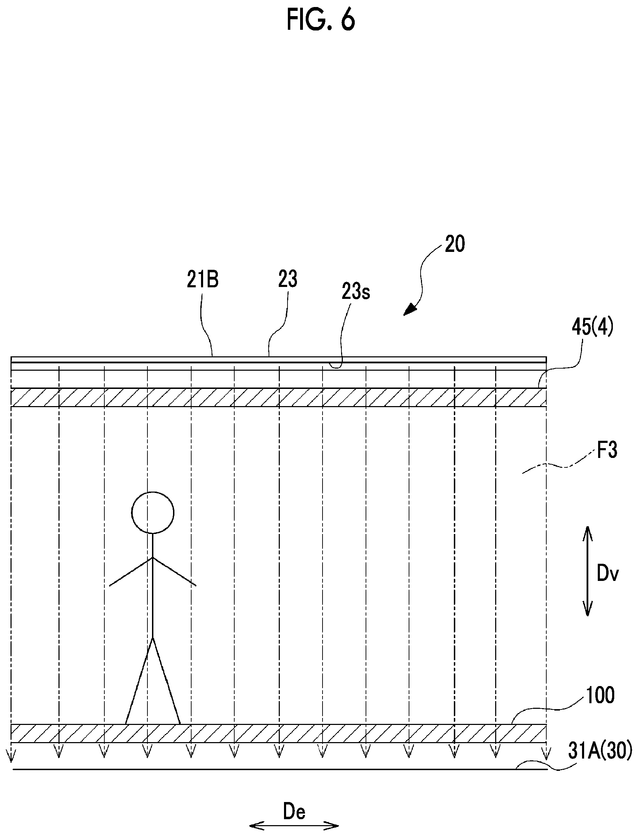

For example, as shown in Figs. 5 and 6, water sprinkling units 21B of the water sprinkling equipment 20 of a first modification example are provided on both sides in the width direction Ds of the ceiling 45 provided above the passage 100. Each of the water sprinkling units 21B is provided with a gutter 23. The gutter 23 extends in the extension direction De of the passage 100, and water flows inside it. The gutter 23 has an opening or a slit 23s continuous in the extension direction De at an upper portion or side portion thereof. In the gutter 23, water flows down through the opening or the slit 23s. A water flow F3 flowing down from the gutter 23 forms a film. In this way, the water sprinkling unit 21B can sprinkle water only to the side portion 100s out of the central portion 100c and the side portions 100s in the width direction Ds of the passage 100.

### (Second Modification Example of First Embodiment)

Further, in the first embodiment, the water sprinkling units 21A are provided on both sides in the width direction Ds of the passage 100. However, there is no limitation thereto.

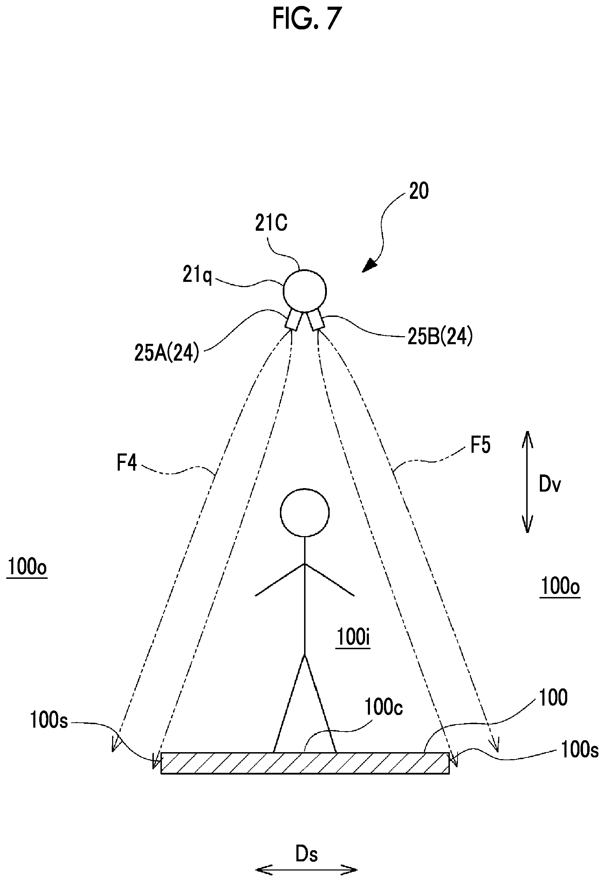

For example, as shown in Fig. 7, a water sprinkling unit 21C of the water sprinkling equipment 20 is provided above the central portion 100c in the width direction Ds of the passage 100. The water sprinkling unit 21C includes a pipe 21q and a plurality of water nozzles 24. The pipe 21q extends in the extension direction De of the passage 100 (the direction orthogonal to the plane of the paper in Fig. 7). The plurality of water nozzles 24 are provided in the pipe 21q at intervals in the extension direction De of the passage 100. Each of the water nozzles 24 has a nozzle shape and blows out the water flowing in the pipe 21q obliquely downward in the width direction Ds. The plurality of water nozzles 24 include a first nozzle 25A that blows out a water flow F4 to the first side in the width direction Ds of the passage 100, and a second nozzle 25B that blows out a water flow F5 to the second side in the width direction Ds. In this way, the water sprinkling unit 21C can sprinkle water only to the side portions 100s out of the central portion 100c and the side portions 100s in the width direction Ds of the passage 100.

### <Second Embodiment>

Next, a second embodiment of the ship according to the invention will be described. In the second embodiment that is described below, since only the configuration of a water sprinkling unit 21D is different from that in the first embodiment, the same portions as those in the first embodiment are denoted by the same reference numerals, and overlapping description is omitted.

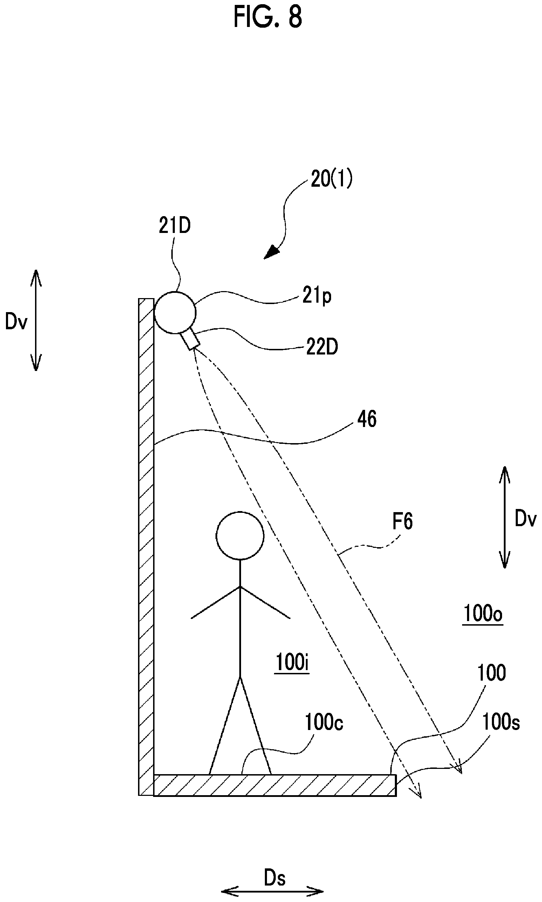

As shown in Fig. 8, the water sprinkling equipment 20 provided in the ship 1 includes the water sprinkling unit 21D. The water sprinkling unit 21D is provided at a wall 46 provided on the first side in the width direction Ds of the passage 100. The water sprinkling unit 21D is provided at an upper portion of the passage 100. Each of the water sprinkling units 21D includes the pipe 21p and a plurality of water nozzles 22D, as in the water sprinkling unit 21A of the first embodiment. The pipe 21p extends in the extension direction De of the passage 100 (the direction orthogonal to the plane of the paper in Fig. 8). The plurality of water nozzles 22D are provided in the pipe 21p at intervals in the extension direction De of the passage 100. Each water nozzle 22D has a nozzle shape and blows out water flowing in the pipe 21p obliquely downward toward the second side in the width direction Ds to form a water flow F6. In this way, the water sprinkling unit 21D can sprinkle water only to the side portion 100s on the second side in the width direction Ds out of the central portion 100c and the side portions 100s in the width direction Ds of the passage 100.

In the ship 1 of the above embodiment, the first side in the width direction Ds of the passage 100 is closed by the wall 46. Water is sprinkled to the second side in the width direction Ds of the passage 100 by the water sprinkling unit 21D provided at the wall 46, so that the passage inside 100i and the passage outside 100o are separated on the second side in the width direction Ds of the passage 100b by the water flow F6, and therefore, the invasion of the ammonia gas to the passage inside 100i can be suppressed. In this way, the contact of the ammonia gas with passengers or crew members passing through the passage 100 can be suppressed. Therefore, it is possible to effectively suppress the influence of the ammonia gas within the ship 1.

The embodiments of the present disclosure have been described in detail above with reference to the drawings. However, the specific configurations are not limited to these embodiments and also include design changes and the like within a scope which does not depart from the gist of the present disclosure.

In the above embodiments, the water recovery equipment 30 is provided. However, for example, in a case where the passage 100 is provided on the upper deck 7, the water sprinkled by the water sprinkling equipment 20 may be discharged overboard from above the upper deck 7 through openings (not shown) formed in the broadsides 5A and 5B by utilizing a water gradient due to the upper deck 7 inclined obliquely downward toward the sides of the broadsides 5A and 5B from the central portion in the ship width direction Dw.

Further, in the above embodiments, the tank 10 or the tank connection space 12 is provided on the stern 3b side with respect to the superstructure 4. However, there is no limitation thereto.

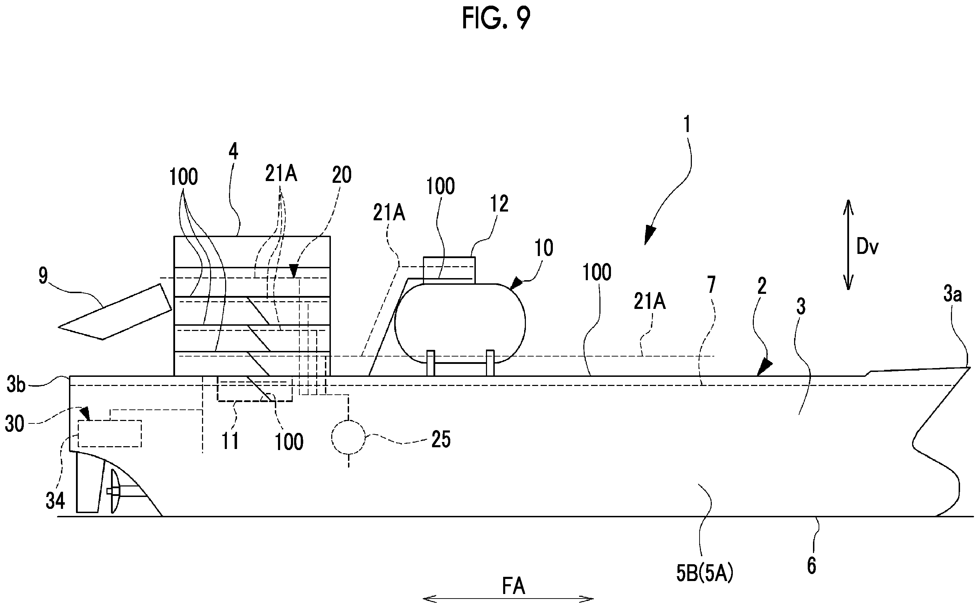

For example, as shown in Fig. 9, the tank 10 or the tank connection space 12 may be provided on the upper deck 7 on the bow 3a side with respect to the superstructure 4. Even in such a case, the water sprinkling equipment 20 similar to those in the above embodiments may be provided at the passage 100 set in the region assumed to be affected by the leakage of ammonia.

Furthermore, even in a case where the tank 10 or the like is provided not only on the upper deck 7 but also in the hull 3 on the lower side of the upper deck 7, the water sprinkling equipment 20 similar to those in the above embodiments may be provided at the passage 100 set in the region assumed to be affected by the leakage of ammonia.

In addition, the ammonia is not limited to ammonia that is used as fuel for the main engine or the like for propelling the ship 1, and may be cargo that is transported by the ship 1. Even in such a case, the water sprinkling equipment 20 similar to those in the above embodiments may be provided at the passage 100 set in the region assumed to be affected by the leakage of ammonia.

### <Additional Remark>

The ship 1 described in each of the embodiments is understood as follows, for example.

(1) A ship 1 according to a first aspect includes the ship main body 2 having the passage 100, the tank 10 that is provided in the ship main body 2 and capable of storing ammonia therein, and the water sprinkling equipment 20 capable of sprinkling water to the passage 100.

The ammonia that is stored in the tank 10 is fuel for the ship 1 or cargo that is transported by the ship 1.

In the ship 1, in a case where the ammonia stored in the tank 10 or the ammonia sent from the tank 10 to the pipe system or the like leaks, water is sprinkled to the passage 100 by the water sprinkling equipment 20. The passage inside 100i and the passage outside 100o are separated by the water that is sprinkled by the water sprinkling equipment 20, so that the invasion of an ammonia gas produced by vaporization of the leaked ammonia to the passage 100 is suppressed. In this way, the contact of the ammonia gas with passengers or crew members passing through the passage 100 can be suppressed. Therefore, it is possible to effectively suppress the influence of the ammonia gas within the ship 1.

(2) In a ship 1 according to a second aspect, in the ship 1 of the above (1), the water sprinkling equipment 20 is capable of sprinkling water only to the side portion 100s out of the central portion 100c and the side portion 100s in the width direction Ds of the passage 100.

In this way, the passage inside 100i and the passage outside 100o are separated by the water that is sprinkled only to the side portion 100s of the passage 100, so that the invasion of the ammonia gas to the passage inside 100i can be suppressed.

(3) In a ship 1 according to a third aspect, in the ship 1 of the above (1) or (2), the water sprinkling equipment 20 includes the water sprinkling unit 21A, 21C, or 21D having the plurality of water nozzles 22 or 22D provided at intervals in the extension direction De of the passage 100.

In this way, the passage inside 100i and the passage outside 100o are separated along the extension direction De of the passage 100 by blowing out water from the plurality of water nozzles 22 or 22D provided at intervals in the extension direction De of the passage 100, so that the invasion of the ammonia gas to the passage inside 100i can be suppressed.

(4) In a ship 1 according to a fourth aspect, in the ship 1 of the above (3), the water sprinkling units 21A or 21B are provided above the passage 100 and on both sides in the width direction Ds of the passage 100.

In this way, the passage inside 100i and the passage outside 100o are separated on both sides in the width direction Ds of the passage 100 by the water that is sprinkled from above the passage 100, so that the invasion of the ammonia gas to the passage inside 100i can be suppressed.

(5) In a ship 1 according to a fifth aspect, in the ship 1 of the above (3), the water sprinkling unit 21D is provided at the wall 46 provided on the first side in the width direction Ds of the passage 100 and sprinkles water to the second side in the width direction Ds of the passage 100.

In this way, the first side in the width direction Ds of the passage 100 is closed by the wall 46. The passage inside 100i and the passage outside 100o are separated on the second side in the width direction Ds of the passage 100 by sprinkling water from the water sprinkling unit 21D provided at the wall 46 to the second side in the width direction Ds of the passage 100, so that the invasion of the ammonia gas to the passage inside 100i can be suppressed.

(6) In a ship 1 according to a sixth aspect, the ship 1 of any one of the above (1) to (5) further includes the water recovery part 31 that is provided below the passage 100 and recovers the water sprinkled by the water sprinkling equipment 20.

In this way, the water sprinkled by the water sprinkling equipment 20 can be recovered by the water recovery part 31 provided below the passage 100. In this way, water that contains ammonia due to contact with the ammonia gas can be recovered, and an increase in the concentration of ammonia remaining around the passage 100 can be suppressed.

(7) In a ship 1 according to a seventh aspect, the ship 1 of the above (6) further includes the water discharge part 32 that discharges the water recovered by the water recovery part 31 to the outside of the ship 1.

In this way, the water recovered by the water recovery part 31 can be discharged overboard.

(8) In a ship 1 according to an eighth aspect, the ship 1 of the above (6) or (7) further includes the water storage part 34 that is provided within the ship main body 2 and stores the water recovered by the water recovery part 31.

In this way, the water recovered by the water recovery part 31 can be stored in the water storage part 34. In the water storage part 34, for example, treatment to dilute ammonia contained in the recovered water, neutralization treatment, or the like can be performed.

### Industrial Applicability

According to the ship of the present disclosure, it is possible to effectively reduce the influence of an ammonia gas within the ship.

### Reference Signs List

1: ship
2: ship main body
3: hull
3a: bow
3b: stern
4: superstructure
5A, 5B: broadside
6: ship bottom
7: upper deck
9: lifeboat
10: tank
11: fuel equipment room
12: tank connection space
20: water sprinkling equipment
21A, 21B, 21C, 21D: water sprinkling unit
21p, 21q: pipe
22, 22D: water nozzle
23: gutter
23s: slit
24: water nozzle
25: water supply pump
25A: first nozzle
25B: second nozzle
26: water intake pipe
27: pump operation unit
30: water recovery equipment
31: water recovery part
31A: recovery tray
31B: recovery pipe
32: water discharge part
32V: on/off valve
34: water storage part
35: tank drain pipe
35V: on/off valve
37: valve opening/closing unit
41 to 44: upper deck
45: ceiling
46: wall
100: passage
100c: central portion
100i: passage inside
100o: passage outside
100s: side portion
FA: bow-stern direction
De: extension direction
Ds: width direction
Dv: up-down direction
Dw: ship width direction
F1, F3, F4, F5, F6: water flow
F2: air flow

## Claims

1. A ship (1) comprising:
a ship main body (2) having a passage (100) configured to be used as an evacuation route through which passengers or crew members of the ship evacuate;
a tank (10) that is provided in the ship main body (2) and capable of storing liquefied ammonia therein;
a supply pipe system connected to the tank (10);
a fuel equipment room (11) configured to accommodate devices for gasifying the liquefied ammonia in the tank (10);
a tank connection space (12) provided with a pump and a valve which are used when loading the liquefied ammonia into the tank (10);
water sprinkling equipment (20) capable of sprinkling water to the passage (100) and only to each side portion out of the central passage in a width direction of the passage (100); and
a sensor provided in at least one of the tank (10), the supply pipe system, the fuel equipment room (11), and the tank connection space (12) and configured to detect ammonia leakage,
wherein the water sprinkling equipment (20) is configured to operate in a case where ammonia leakage is detected by the sensor.

2. The ship (1) according to Claim 1, wherein the water sprinkling equipment (20) includes a water sprinkling unit (21A) having a plurality of water nozzles (22) provided at intervals in an extension direction of the passage (100).

3. The ship (1) according to Claim 2, wherein the water sprinkling units (21A) are provided above the passage (100) and on both sides in a width direction of the passage (100).

4. The ship (1) according to Claim 2, wherein the water sprinkling unit (21A) is provided at a wall provided on a first side in a width direction of the passage (100) and sprinkles water to a second side in the width direction of the passage (100).

5. The ship (1) according to any one of Claims 1 to 4, further comprising:
a water recovery part (31) that is provided below the passage (100) and recovers water sprinkled by the water sprinkling equipment (20).

6. The ship (1) according to Claim 5, further comprising:
a water discharge part (32) that discharges water recovered by the water recovery part (31) to an outside of the ship (1).

7. The ship (1) according to Claim 5 or 6, further comprising:
a water storage part (34) that is provided within the ship main body (2) and stores water recovered by the water recovery part (31).

8. The ship (1) according to Claim 5, further comprising:
a water discharge part (32) that discharges water recovered by the water recovery part (31) to an outside of the ship (1);
a water storage part (34) that is provided within the ship main body (2) and stores water recovered by the water recovery part; and
a concentration sensor configured to detect a concentration of ammonia contained in the water recovered by the water recovery part (31),
wherein, when the concentration of ammonia detected by the concentration sensor is lower than a reference determined in advance, the water recovered by the water recovery part (31) is discharged overboard from the water discharge part (32), and
wherein, when the concentration of ammonia detected by the concentration sensor is higher than the reference determined in advance, the water recovered by the water recovery part (31) is stored in the water storage part (34).

## Patentansprüche

1. Schiff (1), aufweisend:
einen Schiffshauptkörper (2) mit einem Durchgang (100), der dafür konfiguriert ist, als ein Evakuierungsweg verwendet zu werden, durch den Passagiere oder Besatzungsmitglieder des Schiffs evakuieren;
einen Tank (10), der im Schiffshauptkörper (2) vorgesehen ist und in dem verflüssigtes Ammoniak gespeichert werden kann;
ein mit dem Tank (10) verbundenes Versorgungsleitungssystem;
einen Kraftstoffausrüstungsraum (11), der dafür konfiguriert ist, Vorrichtungen zum Vergasen des verflüssigten Ammoniaks im Tank (10) aufzunehmen;
einen Tankanschlussraum (12), der mit einer Pumpe und einem Ventil ausgestattet ist, die beim Einfüllen des verflüssigten Ammoniaks in den Tank (10) verwendet werden;
eine Wassersprühvorrichtung (20), die in der Lage ist, Wasser im Durchgang (100) nur auf jeden Seitenabschnitt außerhalb des mittigen Durchgangs (100) bezogen auf eine Breitenrichtung des Durchgangs (100) zu sprühen; und
einen Sensor, der in mindestens einem von einer Komponente unter dem Tank(10), dem Versorgungsleitungssystem, dem Kraftstoffausrüstungsraum (11) und dem Tankanschlussraum (12) vorgesehen und dafür konfiguriert ist, Ammoniaklecks zu erfassen,
wobei die Wassersprühvorrichtung (20) dafür konfiguriert ist, in einem Fall in Betrieb zu gehen, in dem durch den Sensor ein Ammoniakleck erfasst wird.

2. Schiff (1) nach Anspruch 1, wobei die Wassersprühvorrichtung (20) eine Wassersprüheinheit (21A) mit einer Vielzahl von Wasserdüsen (22) aufweist, die in Abständen in einer Erstreckungsrichtung des Durchgangs (100) angeordnet sind.

3. Schiff (1) nach Anspruch 2, wobei die Wassersprüheinheiten (21A) über dem Durchgang (100) und auf beiden Seiten in der Breitenrichtung des Durchgangs (100) angeordnet sind.

4. Schiff (1) nach Anspruch 2, wobei die Wassersprüheinheit (21A) an einer Wand vorgesehen ist, die an einer ersten Seite in der Breitenrichtung des Durchgangs (100) vorgesehen ist, und Wasser auf eine zweite Seite in der Breitenrichtung des Durchgangs (100) sprüht.

5. Schiff (1) nach einem der Ansprüche 1 bis 4, ferner aufweisend:
ein Wasserrückgewinnungsteil (31), das unterhalb des Durchgangs (100) vorgesehen ist und durch die Wassersprühvorrichtung (20) versprühtes Wasser zurückgewinnt.

6. Schiff (1) nach Anspruch 5, ferner aufweisend:
ein Wasserablassteil (32), das das durch das Wasserrückgewinnungsteil (31) zurückgewonnene Wasser nach außerhalb des Schiffes (1) ablässt.

7. Schiff (1) nach Anspruch 5 oder 6, ferner aufweisend:
ein Wasserspeicherteil (34), das innerhalb des Schiffshauptkörpers (2) vorgesehen ist und das durch das Wasserrückgewinnungsteil (31) zurückgewonnene Wasser speichert.

8. Schiff (1) nach Anspruch 5, ferner aufweisend:
ein Wasserablassteil (32), das das durch das Wasserrückgewinnungsteil (31) zurückgewonnene Wasser nach außerhalb des Schiffes (1) ablässt;
ein Wasserspeicherteil (34), das innerhalb des Schiffshauptkörpers (2) vorgesehen ist und das durch das Wasserrückgewinnungsteil zurückgewonnene Wasser speichert; und
einen Konzentrationssensor, der dafür konfiguriert ist, eine Konzentration von Ammoniak zu erfassen, das in dem durch das Wasserrückgewinnungsteil (31) zurückgewonnenen Wasser enthalten ist,
wobei, wenn die durch den Konzentrationssensor erfasste Ammoniakkonzentration niedriger ist als ein im Voraus festgelegter Referenzwert, das durch das Wasserrückgewinnungsteil (31) zurückgewonnene Wasser über das Wasserablassteil (32) über Bord abgelassen wird, und
wobei, wenn die durch den Konzentrationssensor erfasste Ammoniakkonzentration höher ist als der im Voraus festgelegte Referenzwert, das durch das Wasserrückgewinnungsteil (31) zurückgewonnene Wasser im Wasserspeicherteil (34) gespeichert wird.

## Revendications

1. Navire (1) comprenant :
un corps principal de navire (2) ayant un passage (100) configuré pour servir de voie d'évacuation par laquelle des passagers ou des membres d'équipage du navire évacuent ;
un réservoir (10) qui est fourni dans le corps principal de navire (2) et capable de stocker de l'ammoniac liquéfié dans celui-ci ;
un système de tuyauterie d'alimentation raccordé au réservoir (10) ;
un local d'équipement de carburant (11) configuré pour accueillir des dispositifs pour gazéifier l'ammoniac liquéfié dans le réservoir (10) ;
un espace de raccordement de réservoir (12) doté d'une pompe et d'une vanne qui sont utilisées lors du chargement de l'ammoniac liquéfié dans le réservoir (10) ;
un équipement de pulvérisation d'eau (20) capable de pulvériser de l'eau vers le passage (100) et uniquement vers chaque portion latérale hors du passage central dans une direction de largeur du passage (100) ; et
un capteur fourni dans au moins un parmi le réservoir (10), le système de tuyauterie d'alimentation, le local d'équipement de carburant (11) et l'espace de raccordement de réservoir (12), et configuré pour détecter une fuite d'ammoniac,
dans lequel l'équipement de pulvérisation d'eau (20) est configuré pour fonctionner dans un cas où une fuite d'ammoniac est détectée par le capteur.

2. Navire (1) selon la revendication 1, dans lequel l'équipement de pulvérisation d'eau (20) comporte une unité de pulvérisation d'eau (21A) ayant une pluralité de buses d'eau (22) fournies à intervalles dans une direction d'extension du passage (100).

3. Navire (1) selon la revendication 2, dans lequel les unités de pulvérisation d'eau (21A) sont fournies au-dessus du passage (100) et des deux côtés dans une direction de largeur du passage (100).

4. Navire (1) selon la revendication 2, dans lequel l'unité de pulvérisation d'eau (21A) est fournie au niveau d'une paroi fournie d'un premier côté dans une direction de largeur du passage (100) et pulvérise de l'eau vers un second côté dans la direction de largeur du passage (100).

5. Navire (1) selon l'une quelconque des revendications 1 à 4, comprenant en outre :
une partie de récupération d'eau (31) qui est fournie sous le passage (100) et récupère l'eau pulvérisée par l'équipement de pulvérisation d'eau (20).

6. Navire (1) selon la revendication 5, comprenant en outre :
une partie de déversement d'eau (32) qui déverse l'eau récupérée par la partie de récupération d'eau (31) vers un extérieur du navire (1).

7. Navire (1) selon la revendication 5 ou 6, comprenant en outre :
une partie de stockage d'eau (34) qui est fournie dans le corps principal de navire (2) et stocke l'eau récupérée par la partie de récupération d'eau (31).

8. Navire (1) selon la revendication 5, comprenant en outre :
une partie de déversement d'eau (32) qui déverse l'eau récupérée par la partie de récupération d'eau (31) vers un extérieur du navire (1) ;
une partie de stockage d'eau (34) qui est fournie dans le corps principal de navire (2) et stocke l'eau récupérée par la partie de récupération d'eau ; et
un capteur de concentration configuré pour détecter une concentration d'ammoniac contenue dans l'eau récupérée par la partie de récupération d'eau (31),
dans lequel, lorsque la concentration d'ammoniac détectée par le capteur de concentration est inférieure à une référence déterminée à l'avance, l'eau récupérée par la partie de récupération d'eau (31) est déversée par-dessus bord depuis la partie de déversement d'eau (32), et
dans lequel, lorsque la concentration d'ammoniac détectée par le capteur de concentration est supérieure à la référence déterminée à l'avance, l'eau récupérée par la partie de récupération d'eau (31) est stockée dans la partie de stockage d'eau (34).
